# EUROPEAN PATENT APPLICATION

(11) **EP 1 477 073 A1**
(43) Date of publication of application: **17.11.2004**
(21) Application number: 03703197.8
(22) Date of filing: 05.02.2003
(51) Int. Cl.: A23L 1/238, A23L 1/22, A23L 1/00

(54) **DRY POWDER HOLDING FLAVOR AND AROMA COMPONENTS AND PROCESS FOR PRODUCING THE SAME**

(30) Priority: 18.02.2002 JP 2002040493; 10.07.2002 JP 2002201847
(71) Applicant: Ajinomoto Co., Inc., Tokyo 104-8315 (JP)
(72) Inventor: WATANABE, Aiji, c/o AJINOMOTO CO., INC., Kawasaki-shi, Kanagawa 210-8681 (JP); KATOUNO, Junichi, c/o AJINOMOTO CO., INC., Kawasaki-shi, Kanagawa 210-8681 (JP); YOSHIDA, Teruo, c/o LIFE TECHNO CO., Kawasaki-shi, Kanagawa 210-8681 (JP); TSUJIMOTO, Susumu, c/o AJINOMOTO CO., INC., Kawasaki-shi, Kanagawa 210-8681 (JP)
(74) Representative: Strehl Schübel-Hopf & Partner
(86) International application number: PCT/JP2003/001197
(87) International publication number: WO 2003/068007

(57) **Abstract**

In order to provide a spray dry method capable of producing a dry powder retaining the savor and flavor of a raw material and having solubility without any thermal deterioration, at a mass scale, a method for producing a dry powder keeping savor and flavor from a hydrous liquid material containing a savory and flavorful component and preferably more hygroscopic component by spray drying is disclosed, the method including spray drying the hydrous liquid material at the microfine liquid droplet state in gas atmosphere at the outlet temperature of a spray dryer at 20 to 90°C and the outlet relative humidity of 1 % RH to 40 % RH, to prepare a dry powder of a mean particle size of 0.1 µm to 15 µm.

## Description

### BACKGROUND OF THE INVENTION

### Field of the Invention

The present invention relates to a method for producing a dry powder containing a savory and flavorful component and preferably more hygroscopic component. More specifically, the invention relates to a method for producing a dry powder keeping and retaining the savor and flavor of animal and plant extracts used as raw materials, the method including preparing a liquid material containing a savory and flavorful component and preferablymorehygroscopic component into the formof aparticle state and spray drying or spray drying and granulating the resulting particle, under dehumidified conditions at low temperature without the occurrence of thermal deterioration, as well as the dry powder keeping and retaining the savor and flavor as produced by the method.

### Description of the Related Art

In the food field, traditionally, spray dry method has been used along with freeze-dry method, vacuum continuous belt dry method, and reduced pressure-low temperature dry method with vacuum dry dryer as the method for producing dry powders keeping savor and flavor, for example dry extracts of animals and plants.

Generally, the spray dry method includes preparing a solution or a particle slurry into the form of a microfine particle in hot air and dispersing the particle therein, to prepare a dry powder of spherical and spherical shell-like powders. Pressure nozzle, rotary disk, and two-fluid nozzle and the like are used as the spraying unit. In many cases, the mean particle size of the resulting dry powder is about 20 µm to 500 µm, and the drying time is as short as 5 seconds to 30 seconds (the revised sixth edition, Handbook of Chemistry and Engineering, p.770, p.780 (1999), issued by Maruzen). In recent years, additionally, four-fluid nozzle has been developed, which has enabled mass-scale spray drying with a liquid droplet with a mean particle size of several micrometers (Chemical Apparatus, p.60-65 (June, 2000)).

The spray dry method is used in many cases for the aim of mass scale production. So as to produce an enormous volume of powder for a short period of time, generally, a sample solution is fed at a fast feed rate to a spray dryer, while the inlet temperature of the spray dryer and the outlet temperature thereof are elevated as high as possible, to dry the sample solution at a high speed. For example, milk is dried at the inlet temperature of 150 to 250°C of the spray dryer (Spray Drying Handbook, p.606). Yeast is dried at the inlet temperature of 300 to 350°C (Spray Drying Handbook, p. 656-657). Drying at such high temperature scatters the savor and flavor of a raw material of itself and produces a dry powder with the occurrence of burned odor, so it should be improved. Spray drying at low temperature so as to avoid these disadvantages leads to severe reduction of the productivity and causes the cost up, disadvantageously.

For the production of a dry powder from a hydrous liquid material containing a savory or flavorful component and preferably more hygroscopic component by spray drying in such manner, desirably, (A) mass scale production is possible; (I) the savory and flavorful component is kept; (U) thermal deterioration such as burned odor or browning never occurs; and (E) the resulting dry powder has great solubility. However, no method satisfying all of these has been found.

For dilute solutions (1 % to 7.8 %) of pharmaceutical products such as interferon, it is disclosed that feeding the solutions to a spray dryer (nozzle diameters of 0.4 mm and 0.7 mm) under conditions of the inlet temperature of 50°C or less and the outlet temperature of 35°C or less (estimated) can yield a powder with the maximum powder particle size of about 3 µm to 6 µm, so that the resulting pharmaceutical powders are at a slow dissolution rate and retain the physiological activities (JP-A-11-114027). However, the disclosure does not include any description as to what kind of properties the dry air used in the spray dryer had or any description of the dehumidified conditions or the dehumidified air. Therefore, the dry air is simply interpreted as air for use in drying.

Further, Birs Beteiligungs und Verwaltu carried out drying under dehumidifying and drying conditions at low temperature, using a large vertical countercurrent spray dryer, but he never described the spray particle size (thespecification of GBP 1015599). A subsequent report tells that concentrated tomato juice is dried in dehumidified air at low temperature of 18 to 26°C and at 3 % RH or less in a spray dryer of a concrete tower of a diameter of about 15 m and a height of about 67 m, to obtain a powder of a particle size of 80 µm to 100 µm. However, no production report exists, telling that a microfine particle of a liquid droplet particle size of 20 µm or less was prepared into a dry powder (including granulated powder).

### SUMMARY OF THE INVENTION

It is an object of the invention to provide a spray dry method and a spray dry granulation method for producing a dry powder from a hydrous liquid material containing a savory and flavorful component and preferably more hygroscopic component, where the resulting powder can keep the savory and flavorful component in the raw material and is soluble without thermal deterioration and can be produced at a large scale.

The inventors have made investigations so as to solve the problem. Consequently, the inventors have found that drying of soy sauce and soy sauce containing trehalose under dehumidified conditions at low temperature, using a spray dryer capable of preparing soy sauce and soy sauce containing trehalose into the form of a liquid droplet (particle) of a mean particle size of several micrometers can yield a stable dry powder keeping the savor and flavor essential to soy sauce without any peculiar odor such as burned odor and having great solubility with less browning reaction and that the dry powder can be made instantly. Thus, the invention has been achieved. The invention includes the following individual inventions.
(1) A method for producing a dry powder keeping savor and flavor from a hydrous liquid material containing a savory and flavorful component and preferably more hygroscopic component by spray drying, the method including spray drying the hydrous liquid material at a microfine liquid droplet state in gas atmosphere at the outlet temperature of a spray dryer at 20 to 90°C and the outlet relative humidity of 1 % RH to 40 % RH, to prepare a dry powder of a mean particle size of 0.1 µm to 15 µm.
(2) A method for producing a dry powder keeping savor and flavor from a hydrous liquid material containing a savory and flavorful component and preferably more hygroscopic component by spray drying, the method including spray drying the hydrous liquid material at a microfine liquid droplet state in gas atmosphere at the outlet temperature of a spray dry granulation apparatus at 20 to 90°C and the outlet relative humidity of 1 % RH to 40 % RH, and granulating and drying the resulting drymaterial during spray drying or after spray drying, to prepare a dry powder of a mean particle size of 20 µm to 1,000 µm.
(3) A method for producing a dry powder keeping savor and flavor from a hydrous liquid material containing a savory and flavorful component and preferably more hygroscopic component by spray drying, the method including spray drying the hydrous liquid material at a microfine liquid droplet state in gas atmosphere at the outlet temperature of a spray dry granulation apparatus at 20 to 90°C and the outlet relative humidity of 1 % RH to 40 % RH, granulating and drying the resulting dry material during spray drying or after spray drying, and subsequently finally drying the granulated material, to prepare a dry powder of a mean particle size of 20 µm to 1,000 µm.
(4) A method for producing a dry powder keeping savor and flavor as described in (1) through (3), where the hydrous liquid material is spray dried or spray dried and granulated in the presence of trehalose.
(5) A method for producing a dry powder keeping savor and flavor as described in (4), where the trehalose is added to the hydrous liquid material or the trehalose is prepared into the form of a trehalose solution at a microfine liquid droplet state to be fed to a spray dryer or a spray dry granulation apparatus.
(6) A method for producing a dry powder keeping savor and flavor as described in any one of (1) through (5), where the hydrous liquid material containing a savory and flavorful component and preferably more hygroscopic component is at least one selected from the group consisting of moisture-containing food materials, drinks, liquid seasonings, curry-containing fluids, mustard-containing fluids, Japanese horseradish-containing fluids, garlic-containing fluids and ginger-containing fluids.
(7) A method for producing a dry powder keeping savor and flavor as described in (6), where the liquid seasonings are soy sauce-based liquid seasonings.
(8) A method for producing a dry powder keeping savor and flavor as described in any one of (1) through (5), where the hydrous liquid material containing a savory and flavorful component and preferably more hygroscopic component is a hydrous liquid material containing at least one selected from the group consisting of citrus essential oils, plant essential oils, oily extracts and the oleoresins thereof, synthetic perfume compounds, oily composite perfume.
(9) A method for producing a dry powder keeping savor and flavor as described in any one of (1) through (8), where the outlet temperature of a spray dryer is 20 to 75°C.
(10) A method for producing a dry powder keeping savor and flavor as described in any one of (1) through (9), where the outlet relative humidity of a spray dryer is 3 % RH to 20 % RH.
(11) A method for producing a dry powder keeping savor and flavor as described in any one of (1) through (9), where the outlet relative humidity of a spray dryer is 6 % RH to 10 % RH.
(12) A dry powder produced by a method for producing a dry powder keeping savor and flavor as described in any one of (1) through (11).

### DETAILED DESCRIPTION OF THE INVENTION

The invention is now described in detail.

### (Hydrous liquid material containing a savory and flavorful component and preferably more hygroscopic component)

The "hydrous liquid material containing a savory and flavorful component and preferably more hygroscopic component" for use in accordance with the invention is a hydrous composition containing a savory and flavorful component and preferably more hygroscopic component. Therefore, all hydrous compositions at solution state or particle slurry state or possibly prepared into solution state or particle slurry state are the subjects.

In the food field, specifically, such hydrous liquid material includes moisture-containing food materials, drinks, liquid seasonings such as animal andplant extracts, for example chicken and cattle extracts such as chicken extract, pork extract and beef extract, fish and shellfish extracts such as oceanic bonito extract, dried and sliced oceanic bonito chip, seasoned fluid materials recovered via fermentation and enzyme reaction such as soy sauce and soybean paste, fluid materials or ground materials of agricultural products such as corn paste, squeezed citrus, and other fluid materials, extracts, and ground materials derived from various animals and plants and the like. When the hydrous liquid material is to be prepared into the form of a dry powder, preferably, the liquid material can be solidified under conditions of 20°C and a relative humidity of 40 % RH for 5 days. The invention is applicable to such liquid material.

Furthermore, "the liquid material containing a savory and flavorful component and preferably more hygroscopic component" includes hydrous liquid materials containing flavorful components such as curry, mustard, Japanese horseradish, garlic, ginger, egg flavor, and vinegar as the subjects.

For the purpose of retaining the savor and flavor of a material to be dried, traditionally, a relatively large amount of excipients (for example, dextrin, cyclodextrin, gelatin and the like) has been likely to be used. Under the spray dry conditions in accordance with the invention, however, dry powders retaining savor and flavor can be produced from "liquid materials with savory and flavor" at a high content of contaminants, without any addition of excipients. Specifically, pure soy sauce (solid content of about 42 w/w %) at absolutely no content of dextrin and the like can be produced as soy sauce powder at a mass scale (see Example 1).

If necessary, further, additives for example seasonings such as sodium glutamate, sweeteners such as sugar and amino acid-based sweetener aspartame, various salts, spices, oils and fats (solid and liquid) for flavor and the like, preservatives and stabilizers, colorants, and perfume can be contained in "the liquid material containing a savory and flavorful component andpreferablymore hygroscopic component", so as to improve the savor and flavor and physico-chemical properties.

In the field of perfume, further, "the liquid material containing a savory and flavorful component andpreferably more hygroscopic component" includes essential oils of citrus (orange, lemon, lime, grape fruit, etc.), plant essential oils (peppermint oil, spearmint oil, flower essential oils, spice oils, etc.), oily extracts and oleoresins thereof, synthetic perfume compounds, oily composite perfume and the like as the subjects. It is needless to say that like the food materials, various additives for example dextrin, sugar, lactose, emulsifiers, water-soluble hemicellulose, and fatty acid esters can be contained therein (see the gazettes of Japanese Patent No. 3057133, JP-A-9-107911, JP-A-9-111284, JP-A-9-187249, JP-A-2000-217538, JP-A-2001-152179, and JP-A-2001-186858).

As to the concentration of "the liquid material containing a savory and flavorful component and preferably more hygroscopic component" for use in accordance with the invention, any concentration thereof is satisfactory, at which the liquid material has a viscosity to be possibly fed to spray dryer and can be prepared into the form of a liquid droplet of a mean particle size of 0.1 µm or more to less than 20 µm. Therefore, the concentration can be appropriately selected, from the respect of the combination of the liquid material concentration and the apparatus for particle preparation. For example, soy sauce at a solid concentration of 35 % to 55 % can be used sufficiently as the liquid material. In case of using spray nozzles such as three-fluid nozzle and four-fluid nozzle, the viscosity of the liquid material is preferably 200 cps or less, and more preferably 80 cps or less. For rotary atomizer (rotary disk), the viscosity is preferably 70,000 cps or less.

### (Apparatus in relation with spray drying)

Then, a commercially available spray dryer can be used as the spray dryer for use in accordance with the invention. For example, a spray dryer with a vertical parallel flow function is preferable. Essentially, the spray dryer should be a system with a dehumidifying and drying function. As described below, for example, a spray dryer capable of blowing a high volume of dry gas dehumidified at 1 % RH or less is particularly preferable as the dehumidifying apparatus. For a spray dryer with no dehumidifying and drying function, the spray dryer is inevitably arranged with for example dry dehumidifier BX series manufactured by Munsters K.K., and HCS series and HCP series manufactured by Nichias Corporation. The spray dryer includes micromist dryer MD series and hybrid granulator series manufactured by Fujisaki Electric Co., Ltd., FSD spray dryer with internal fluid layer as manufactured by Niro Corporation, fluid granulation spray dryer and L-8 type spray dryer manufactured by O-gawara Chemical Engineering Machine Corporation, and DL-21 type and GB-21 type manufactured by Yamato Scientific Co., Ltd. (On a needed basis, spray dry granulation apparatus can be used, and therefore, it is also described.)

By the method in accordance with the invention, it is essential to carry out spray drying, using a sprayer capable of generating a liquid droplet (particle) of a mean particle size of 0.1 µm or more to less than 20 µm. Specifically, it is essential to carry out drying, using a spray dryer or spray dry granulation apparatus with a spray nozzle capable of generating a large volume of a liquid droplet of a mean particle size of 0.1 µm or more to less than 20 µm, preferably 0.1 µm to 10 µm, and more preferably 1 µm to 8 µm. When the liquid droplet is dried, a dry powder of a mean particle size of 0.1 µm to 15 µm, preferably 0.1 µm to 7 µm and more preferably 0.7 µm to 6 µm is prepared. This is preferable from the respect of the retention of the savor and flavor, because such dry powder can be recovered via drying under low-temperature conditions for a short time. For example, the four-fluid nozzle manufactured by Fujisaki Electric Co., Ltd., which can spray a large volume (for example, 1 kg/min) of liquid droplet of a mean particle size of several micrometers (Patent No. 2797080; "Chemical Apparatus", 2000, No. 6, p. 60 - p.65) and the three-fluid nozzle manufactured by Fukusen Production Corporation, which can spray a large volume (for example, 150 g/min) of liquid droplet of a mean particle size of 1 µm to 10 µm (JP-B-63-5146) are included. The four-fluid nozzle is particularly preferable because the nozzle can spray a large volume.

The spray dryer is more preferably an apparatus with a granulation function (spray dry granulation apparatus). Furthermore, the spray dry granulation apparatus is preferably equipped with a unit capable of finally drying the granulated material. In case of a particle with a small specific gravity, in particular, a dry powder particle of a mean particle size of 0.1 µm to 15 µm disadvantageously involves difficulty in handling. Preferably, a granulation function is additionally arranged in the inside of the spray dryer or at a state in communication with the spray dryer. Appropriate conditions for the granulation size may satisfactorily be selected, depending on the need. For example, the granulation size is 20 µm to 1,000 µm, and preferably 20 µm to 500 µm. As to the start timing of granulation, satisfactorily, granulation is sometimes effected almost simultaneously with spray drying or in other case, fluid granulation is effected after spray drying or both of fluid granulation and spray drying are effected simultaneously. From the respect of the retention of savor and flavor, spray drying and granulation are almost simultaneously carried out. Depending on the physico-chemical properties of a subj ect dry powder, spray drying and granulation are carried out in a manner case by case.

Then, the operation conditions such as the drying temperature of the spray dry granulation apparatus and the relative humidity thereof are now described. Among the operation conditions of the spray dry granulation apparatus, it is essential to preset the outlet temperature of the spray dry granulation apparatus to 20 to 90°C and the outlet relative humidity to 1% RH to 40 % RH. Specifically, it is as follows. The spray dry granulation apparatus for use in accordance with the invention includes for example "Hybrid Granulator Series as granulation apparatus on filter cloth with spray drying function equipped" manufactured by Fuj isaki Electric Co., Ltd. The inlet temperature of the spray dry granulation apparatus of the invention is 30 to 160°C, preferably 30 to 110°C, more preferably 40 to 100°C, and particularly preferably 40 to 90°C. The outlet temperature of the spray dry granulation apparatus of the invention is 20 to 90°C, preferably 20 to 75°C, more preferably 35 to 60°C, and particularly preferably 35 to 50°C. Furthermore, the inlet relative humidity of the spray dry granulation apparatus of the invention is 35 % RH or less, preferably 15 % RH or less, more preferably 7 % RH or less and most preferably 1 % RH or less. The outlet relative humidity of the spray dry granulation apparatus is further 1 % RH to 40 % RH, preferably 3 % RH to 20 % RH, and more preferably 6 % RH to 10 % RH. In accordance with the invention, herein, the outlet relative humidity of the spray dry granulation apparatus means the relative humidity in the vicinity of the powder collection part of the spray dry granulation apparatus. For the spray dryer of the vertical parallel flow type, the outlet relative humidity means the relative humidity (exhaust gas humidity) at the exhaust part thereof. For the "Hybrid Granulator Series HGL-130 as granulation apparatus on filter cloth with spray drying function equipped" manufactured by Fujisaki Electric Co. , Ltd., for example, the outlet relative humidity means the relative humidity (exhaust gas humidity) in the vicinity of the filter cloth at the powder collection part of the apparatus. During granulation or after granulation, further, final drying can be done preferably.

### (Operation conditions of spray dryer)

The conditions of the spray dryer, such as drying temperature and relative humidity are described as keys for the invention. The operation conditions of the spray dryer are essentially as follows. The outlet temperature of the spray dryer is set to 20 to 90°C, while the outlet relative humidity is set to 1 % RH to 40 % RH. Specifically, it is as follows.

The inlet temperature of the spray dryer for use in accordance with the invention is 50 to 120°C, preferably 50 to 100°C, more preferably 60 to 90°C, andparticularlypreferably 60 to 80°C. The outlet inlet temperature of the spray dryer for use in accordance with the invention is 20 to 90°C, preferably 20 to 75°C, more preferably 35 to 60°C, and particularly preferably 35 to 50°C. In accordance with the invention, herein, the term "outlet temperature of the spray dryer" means the product temperature of the dry powder in the vicinity of the powder collection part of the spray dryer. For the spray dryer of the vertical parallel flow type, the outlet temperature means the temperature (exhaust gas temperature) at the exhaust part thereof. For the "Hybrid Granulator Series HGL-130 as granulation apparatus on filter cloth with spray drying function equipped" manufactured by Fujisaki Electric Co., Ltd., for example, the outlet temperature means the product temperature (exhaust gas temperature) of a product to be dried on the filter cloth at the powder collection part of the apparatus. The outlet temperature of the spray dryer at less than 20°C is not preferable from the respect of productivity. The outlet temperature thereof at more than 90°C is not preferable because the retained savor and flavor is so often scattered under observation. The temperature range of 35 to 50°C is particularly preferable, from the respect of the retention of savor and flavor and from the respect of productivity, for spray drying a liquid material containing a savory and flavorful component such as dried extracts and soy sauce and preferably more hygroscopic component.

Alternatively, the inlet relative humidity of the spray dryer of the invention is 20 % RH or less, preferably 15 % RH or less, and more preferably 1 % RH or less. The outlet relative humidity of the spray dryer of the invention as set in accordance with the invention is 1 % RH to 40 % RH, preferably 3 % RH to 20 % RH, and more preferably 6% RH to 10 % RH. In accordance with the invention, herein, the outlet relative humidity of the spray dryer means the relative humidity in the vicinity of the powder collection part of the spray dryer. For the spray dryer of the vertical parallel flow type, the outlet relative humidity means the relative humidity (exhaust gas humidity) at the exhaust part thereof. For the "Hybrid Granulator Series HGL-130 as granulation apparatus on filter cloth with spray drying function equipped" manufactured by Fujisaki Electric Co., Ltd. , for example, the outlet relative humidity means the relative humidity (exhaust gas humidity) in the vicinity of the filter cloth at the powder collection part of the apparatus.

When soy sauce is to be dried by the spray dry method or the spray dry granulation method of the invention, the outlet relative humidity of 15 % RH or less, preferably 1% RH to 12 % RH, and more preferably 1 % RH to 10 % RH is suitable for spray drying, but the outlet relative humidity varies due to the influence of additives. When it is intended to simultaneously carry out granulation because of the prevention of fluffy powder state, the relative humidity is 6 % RH to 10 % RH, preferably.

In case of soy sauce, the temperature of the hot air inlet of the spray dryer is 50 to 200°C, and preferably 70 to 110°C, while the outlet temperature (exhaust gas) is 20 to 80°C, and preferably 30 to 50°C, from the respect of the retention of savor and flavor.

Particularly from the respect of the improvement of the productivity of dry powder, the volume of a dry gas, for example dry air for use in accordance with the invention is preferably 0.5 m/min or more, more preferably 1 m/min to 5 m/min, and still more preferably 1 m/min to 3.5 m/min. Herein, the volume of dry air means the air rate (m/min) in the spray dryer or at the cylinder part (the trunk part) of the body of the spray dry granulation apparatus. For "Hybrid Granulator HGL-130 as granulation apparatus on filter cloth with spray drying function equipped" manufactured by Fujisaki Electric Co., Ltd., for example, the volume means filtration rate. Further, the liquid feed rate of the liquid raw material canbe preset appropriately, in relation with the inlet temperature, the outlet temperature, the exhaust gas humidity, the type of the liquid raw material, the desired particle size and the like. Additionally, the spraying pressure is preferably 0.5 kg/cm² or more, more preferably 1 kg/cm² to 5 kg/cm², and still more preferably 1 kg/cm² to 3 kg/cm².

Furthermore, the gas to be used in accordance with the invention may satisfactorily be gases other than air, provided that the gases can satisfy the conditions described above. Inert gases, for example nitrogen gas and carbonate gas, can be used. For readily oxidizable substances, inert gases are effective.

### (Trehalose)

By adding trehalose to the "liquid material containing a savory and flavorful component and preferably more hygroscopic component" prior to spraying and the like and then spray drying the resulting mixture in accordance with the invention, the resulting dry powder can retain the savor and flavor of the liquid material and is soluble but is hardly solidified. It has been known that trehalose has the following numerous advantages. Trehalose is distributed widely in naturally occurring materials such as mushrooms, beans, shrimps, seaweeds and the like, and is one of sugars having been ingested traditionally. Trehalose is hardly hygroscopic (for example, trehalose dihydrate is hardly hygroscopic, up to the relative humidity of 95 % RH). Trehalose has an effect of preventing moisture evaporation. Trehalose has an effect on preventing protein modification and never causes Maillard's reaction (see "Treha" in the catalog of Hayashibara Co., Ltd.).

The trehalose for use in accordance with the invention includes α,α-trehalose, α,β-trehalose and β,β-trehalose. The dihydrate of α,α-trehalose now more inexpensive and naturally occurring, is preferable, because the dihydrate thereof is never hygroscopic over time. For example, a commercially available product "Treha" (Hayashibara Co., Ltd.) is listed.

For moisture-containing food materials, drinks, and liquid seasonings such as animal and plant extracts, the amount of trehalose to be added (on an anhydride basis) is such that the resulting dry powder may contain trehalose at 0.1 w/w % to 50 w/w %, preferably 0.1 w/w % to 30 w/w %, and more preferably 0.1 w/w % to 20 w/w %. For perfume such as citrus essential oils, plant essential oils, oilyextracts andoleoresins thereof, synthetic perfume compounds, and oily composite perfume powders, alternatively, trehalose is appropriately added within a range of 1 to 100 parts by mass, more preferably 0.1 to 50 parts by mass per one part by mass of perfume.

Trehalose is mixed with to the "liquidmaterial containing a savory and flavorful component and preferably more hygroscopic component" in such a manner that both of them are prepared into a mixture solution state before spray drying or that the "liquid material containing a savory and flavorful component and preferably more hygroscopic component" and the "trehalose solution" are simultaneously sprayed together during spray drying. After spray drying the "liquid material containing a savory and flavorful component and preferably more hygroscopic component" (liquidmaterial) , further, the "trehalose solution" is sprayed as a coating agent and a binding agent and/or is then granulated, satisfactorily. If necessary, further, additives other than trehalose may be added.

The operation conditions of the spray dryer and the spray dry granulation apparatus for use in accordance with the invention, such as outlet temperature and outlet relative humidity, are as described above. A liquid material containing trehalose is prepared into the form of a microfine liquid droplet (particle) of a mean particle size of for example 0.1 µm or more to less than 20 µm, preferably 0.1 µm to 10 µm, and more preferably 1 µm to 8 µm, so that the liquid droplet can be instantly dried and granulated. Because of the instant drying at low temperature, it is supposed that trehalose is then at amorphous state. Thus, the material containing a savory and flavorful component and pref erably more hygroscopic component is retained in the co-presence of trehalose and is prepared into a material with excellent solubility. Furthermore, trehalose has an effect on the prevention of solidification as an excipient, so the resulting dry powder is stable under storage for a long term.

For the production of a dry powder from a liquid material containing a savory and flavorful component and preferably more hygroscopic component in such manner, the liquid material is spray dried at a particle state, using dehumidified gas at low temperature. Compared with production methods of the related art, the savory and flavorful component can be retained and additionally, the hygroscopic substance can be readily dried, so that a spray dry powder with solubility and without thermal deterioration can be produced at a mass scale.

The dry powder thus produced in such manner can be used as it is or as an intermediate material in the fields of food products and perfume. For example, the dry powder can be used as it is as powders and tablets. Additionally, the dry powder can be used in foods and drinks, such as soup stock, curry roux, mixture of dry and minced seaweed, small fishes and sesame seed and the like ("furikake" in Japanese) , Chinese soup stock, soy sauce-based soup for tempura (a recipe of frying vegetables, fishes, etc.), noodle soup, broth, mirin (sweet sake) , drinks, powdered drinks, dessert, creams, cakes, chocolate, chewing gum, caramels, snacks, ice sherbets, tablet sweets, fishery processed foods, cattle processed foods, and retort foods.

The method of the invention has a wide range of applicability such as applicability to oils and fats without any content of savory and flavorful components or hygroscopic components. Therefore, powdered oily materials of higher quality and long-term stable storability can be produced, using the spray dryer (granulation apparatus) and the spray dry (granulation) conditions capable of generating the microfine liquiddropletof the invention, by adding synthetic surfactants such as sucrose fatty acid ester, glycerin fatty acid ester, and polyglycerin fatty acid ester, and excipients such as trehalose to fats and oils and functional oily materials. (The spray drying described in JP-A-9-187249 is done according to the spray dry method of the invention).

### EXAMPLES

The present invention will now be described in the following Examples. However, the invention is not at all limited to these Examples.

### Example 1

Refined soy sauce (tamari soy sauce) at a solid content of 42 % (Ichibiki soy sauce K-85) was dried and granulated with "HGL-130 type as granulation apparatus on filter cloth with spray drying function equipped" manufactured by Fujisaki Electric Co., Ltd. Under conditions that the flow of hot air dehumidified at 25°C to a relative humidity of 1 % RH (produced by dehumidifier BX-600 type manufactured by Munsters K.K.) was set to 3.4 m³/min (filtration rate of about 2 m/min) and that the inlet temperature of the hot air was set to 80 to 83°C and the feed rate of the refined soy sauce was set to 1.75 to 1.93 kg/hr, the exhaust gas temperature (outlet temperature) was 44 to 45°C and the exhaust gas humidity (outlet relative humidity) was 7 to 8 % RH, so that a microfine dry powder (single particle) of a mean particle size of about 3 µm was generated, which was then densified under pressure and granulated on the filter membrane for particle collection. The final product was a dry granulated powder of the refined soy sauce, which was at a moisture content of 1.9 % (Karl-Fisher titration method) and of a mean particle size of 33 µm. Additionally, the measured meanparticle size of the "microfine dry powder (singleparticle) was a visual estimate under microscope. Additionally, the mean particle size of the "granulated dry powder (of the refined soy sauce)" was measured as particle size distribution by the wet mode using ethyl alcohol (at a purity of 99.5 %) with "laser diffraction & scattering particle size analyzer (manufactured by Honeywell, Co., Ltd.) connected with microtruck ASVR (automatic small-volume circulator)". In the following Examples 2 and 3 and Comparative Example 1, the same measurement method is used.

### Example 2

Adding "Treha" under product name (trehalose dihydrate; manufactured by Hayashibara Co., Ltd.) at an amount corresponding to 10 % of the solid in the refined soy sauce of Example 1, a raw material at a solid concentration of 44.6 % was prepared. Using then "HGL-130 type as granulation apparatus on filter cloth with spray drying function equipped" manufactured by Fujisaki Electric Co., Ltd., under conditions that the flow of hot air dehumidified at 25°C to a relative humidity of 1 % RH (produced by dehumidifier BX-600 type manufactured by Munsters K.K.) was set to 3.4m³/min (filtration rate of about 2 m/min) and that the inlet temperature of the hot air was set to 81 to 83°C and the feed rate of the raw material was set to 1.8 to 2.2 kg/hr, the exhaust gas temperature was 44 to 47°C and the exhaust gas humidity was 8 % RH, so that a microfine dry powder (single particle) of a mean particle size of about 3 µm was generated, which was then densified under pressure and granulated on the filter membrane for particle collection. The final product was a dry granulated powder of the refined soy sauce, which was at a moisture content of 2.7 % (Karl-Fisher titration method) and of a mean particle size of 37 µm.

### Example 3

Adding "Treha" under product name (trehalose dihydrate; manufactured by Hayashibara Co., Ltd.) at an amount corresponding to 5 % of the solid in the refined soy sauce of Example 1, a raw material at a solid concentration of 43.2 % was prepared. Using then "HGL-130 type as granulation apparatus on filter cloth with spray drying function equipped" manufactured by Fuj isaki Electric Co., Ltd., under conditions that the flow of hot air dehumidified at 25°C to a relative humidity of 1 % RH (produced by dehumidifier BX-600 type manufactured by Munsters K.K.) was set to 3.4 m³/min (filtration rate of about 2 m/min) and that the inlet temperature of the hot air was set to 81 to 83°C and the feed rate of the raw material was set to 1.8 to 2.1 kg/hr, the exhaust gas temperature was 45 to 49°C and the exhaust gas humidity was 8 % RH, so that a microfine dry powder (single particle) of a mean particle size of about 3 µm was generated, which was then densified under pressure and granulated on the filter membrane for particle collection. The final product was a dry granulated powder of the refined soy sauce, which was at a moisture content of 2.1 % (Karl-Fisher titration method) and of a mean particle size of 34 µm.

### Comparative Example 1

With a spray dyer with an internal fluid layer under conditions of the hot air inlet temperature of 160 to 180°C and the exhaust gas temperature of 95°C, a microfine particle dry powder of refined soy sauce and of a mean particle size of about 30 µm was prepared and then granulated in the internal fluid layer, to prepare the dry powder of the granulated soy sauce and of a mean particle size of about 120 µm as the final granulated product.

The Examples 1 through 3 and Comparative Example 1 were evaluated of their savor, flavor, burned odor, solubility and solidification property. The results are shown in Table 1. Specifically, all of the dry powders of Examples 1 through 3 still retained the flavor of fresh refined soy sauce (Ichibiki refined soy sauce) with great savor, and were apparently greater powders than the spray dried product via drying at high temperature (Comparative Example 1).

Further, the powders of refined soy sauce as in Examples 1 through 3 retained more the soy sauce-specific savor and flavor, compared with vacuum dried products. Furthermore, the powders of refined soy sauce as in Examples 1 through 3 were all readily soluble and instantly solubilized, so these powders were satisfactory food products.

**Table 1**

| Results of assessment of powdered soy sauce | | | | |
|---|---|---|---|---|
| Items | Example 1 | Example 2 | Example 3 | Comparative Example 1 |
| Savor retention | 3 | 3 | 3 | 2 |
| Flavor retention | 4 | 4 | 4 | 2 |
| Degree of bumed odor | 5 | 5 | 5 | 4 |
| Solubility | 5 | 5 | 5 | 5 |
| Solidification level | 4 | 5 | 5 | 5 |
| Total score | 21 | 22 | 22 | 18 |

### With respect to assessed scores

By the assessment, the following scores were assigned.
"Savor retention and flavor retention": by ranking fresh soy sauce at 5, the following scores were designated: 4 : relatively good; 3: normal; 2: slightly poor; 1: poor.
"Degree of burned odor": 5: none; 4: almost none; 3: slight smell; 2: fair smell; 1: bad smell.
"Solubility": 4: easy dissolution 3: normal; 2: difficulty in dissolution; 1: hardly dissolving.
"Solidification level" (after standing alone in sealed state for one week): 4: no solidification; 3: normal; 2: slight solidification; 1: much solidification.

For the production of a dry powder from a liquid material containing a savory and flavorful component and preferably more hygroscopic component by the method of the invention, the liquid material prepared into a microfine liquid droplet state is spray dried under dehumidified conditions at low temperature, namely the outlet temperature of the spray dryer at 20 to 90°C and the outlet relative humidity of 1 % RH to 40 % RH, so that a dry powder containing a savory and flavorful component more highly compared with products of the related art could be obtained readily. Further, the dry powder containing trehalose can retain savor and flavor and has an additional effect on the prevention of solidificationas an excipient for hygroscopic components and the like, and has great solubility. Therefore, the method when used can provide processed food products of high quality and with improved savor and flavor.

## Claims

1. A method for producing a dry powder keeping savor and flavor from a hydrous liquid material containing a savory and flavorful component and preferably more hygroscopic component by spray drying, the method including spray drying the hydrous liquid material at a microfine liquid droplet state in gas atmosphere at the outlet temperature of a spray dryer at 20 to 90°C and the outlet relative humidity of 1 % RH to 40 % RH, to prepare a dry powder of a mean particle size of 0.1 µm to 15 µm.

2. A method for producing a dry powder keeping savor and flavor from a hydrous liquid material containing a savory and flavorful component and preferably more hygroscopic component by spray drying, the method including spray drying the hydrous liquid material at a microfine liquid droplet state in gas atmosphere at the outlet temperature of a spray dry granulation apparatus at 20 to 90°C and the outlet relative humidity of 1 % RH to 40 % RH, and granulating and drying the resul ting dry material during spray drying or after spray drying, to prepare a dry powder of a mean particle size of 20 µm to 1,000 µm.

3. A method for producing a dry powder keeping savor and flavor from a hydrous liquid material containing a savory and flavorful component and preferably more hygroscopic component by spray drying, the method including spray drying the hydrous liquid material at a microfine liquid droplet state in gas atmosphere at the outlet temperature of a spray dry granulation apparatus at 20 to 90°C and the outlet relative humidity of 1 % RH to 40 % RH, granulating and drying the resulting dry material during spray drying or after spray drying, and subsequently finally drying the granulated material, to prepare a dry powder of a mean particle size of 20 µm to 1,000 µm.

4. A method for producing a dry powder keeping savor and flavor according to claims 1 through 3, where the hydrous liquid material is spray dried or spray dried and granulated in the presence of trehalose.

5. A method for producing a dry powder keeping savor and flavor according to claim 4, where the trehalose is added to the hydrous liquid material or the trehalose is prepared into the form of a trehalose solution at a microfine liquid droplet state to be fed to a spray dryer or a spray dry granulation apparatus.

6. A method for producing a dry powder keeping savor and flavor according to any one of claims 1 through 5, where the hydrous liquid material containing a savory and flavorful component and preferably more hygroscopic component is at least one selected from the group consisting of moisture-containing food materials, drinks, liquid seasonings, curry-containing fluids, mustard-containing fluids, Japanese horseradish-containing fluids, garlic-containing fluids and ginger-containing fluids.

7. A method for producing a dry powder keeping savor and flavor according to claim 6, where the liquid seasonings are soy sauce-based liquid seasonings.

8. A method for producing a dry powder keeping savor and flavor according to any one of claims 1 through 5, where the hydrous liquid material containing a savory and flavorful component and preferably more hygroscopic component is a hydrous liquid material containing at least one selected from the group consisting of citrus essential oils, plant essential oils, oily extracts and the oleoresins thereof, synthetic perfume compounds, oily composite perfume.

9. A method for producing a dry powder keeping savor and flavor according to any one of claims 1 through 8, where the outlet temperature of a spray dryer is 20 to 75°C.

10. A method for producing a dry powder keeping savor and flavor according to any one of claims 1 through 9, where the outlet relative humidity of a spray dryer is 3 % RH to 20 % RH.

11. A method for producing a dry powder keeping savor and flavor according to any one of claims 1 through 9, where the outlet relative humidity of a spray dryer is 6 % RH to 10 % RH.

12. A dry powder produced by a method for producing a dry powder keeping savor and flavor according to any one of claims 1 through 11.
